# EUROPEAN PATENT SPECIFICATION

(11) **EP 2 257 746 B1**
(45) Date of publication and mention of the grant of the patent: **27.09.2017**
(21) Application number: 09713066.0
(22) Date of filing: 17.02.2009
(51) Int. Cl.: F24J 3/08, F16L 1/032, E21B 19/22, B65H 51/10, B65H 57/16, F16L 1/06, B65H 57/14

(54) **HOSE FEED MACHINE**
SCHLAUCHZUFUHRMASCHINE
MACHINE D'AVANCE DE TUYAU SOUPLE

(30) Priority: 18.02.2008 SE 0800363
(43) Date of publication of application: 08.12.2010
(73) Proprietor: Slangman AB, 602 23 Norrköping (SE)
(72) Inventor: HOLM, Lars-Olof, 610 55 Stigtomta (SE)
(74) Representative: Groth & Co. KB
(86) International application number: PCT/SE2009/050168
(87) International publication number: WO 2009/105017

(56) References cited:
- EP-A2- 1 207 331
- WO-A1-2006/089400
- DE-A1- 4 440 550
- DE-A1- 4 440 550
- DE-U1- 8 808 676
- JP-A- H07 285 742
- SE-B- 442 051
- SE-C2- 523 349
- US-A- 4 441 561

## Description

The present invention relates to a hose feed machine for the feed of hoses into and/or out of a cavity, the machine having a motor, which drives at least one driving wheel, which in turn exerts a feed force on a first pair of hoses, the machine being arranged to feed at least one second pair of hoses into the cavity simultaneously with the first pair of hoses and/or to feed at least one second pair of hoses out of the cavity simultaneously with the first pair of hoses, and the pairs of hoses being mechanically interconnected in at least one point.

### Prior Art

For the use of, for instance, geothermal or rock heat for heating purposes, a pair of hoses is usually brought down into a drill hole in the ground. The individual hoses included in the pair of hoses are united at the end that is first brought down into the drill hole in such a way that a heat-transferring liquid can be pumped from a heat pump down into one of the hoses and up in the other hose. A hose feed machine for bringing down a single pair of hoses is previously known, but the machine is, in existing design, not suitable to use when bringing down two pair of hoses simultaneously into the drill hole or another cavity.

EP 1207331 A2 discloses a machine for laying underground pipes. The machine comprises a movable structure supporting a digging tool and means to feed the pipes to be laid underground. Guide means are provided to guide the pipes, said guide means comprising pipe-pushing means for pushing said pipes into a seating.

US 4,441,561 discloses a method and apparatus for dealing with a packer assembly in a downhole. US 4,441,561 further discloses a device for feeding pipes and support hoses into the downhole.

JP 07285742 discloses a hose feeding device comprising a base bed, a stay that is erected from the base bed, a frame arranged at the upper part of the stay and extended along the moving locus und rotatably support by the frame. The device further comprises lateral guide rollers and vertical guide rollers, whereby at least one of the guide rollers is driven by a drive means in order to feed the hose for instance into a hole.

### Summary of the Invention

The object of the present invention is to provide an arrangement according to the subject matter of claim 1. Accordingly, said hose feed machine is allowing the feed of the two or more pairs of hoses simultaneously into and/or out of a cavity.

The hoses may be intended to be included in a heating system for utilizing geothermal heat or the like, and the cavity may be a drill hole in the ground.

A guide device may be arranged to keep together and guide the second pair of hoses primarily parallel to the first pair of hoses past the machine. The guide device may comprise at least two lateral supports. The guide device may comprise a supporting roll having a rotation axis primarily parallel to the drive shaft of the driving wheel.

### List of Figures

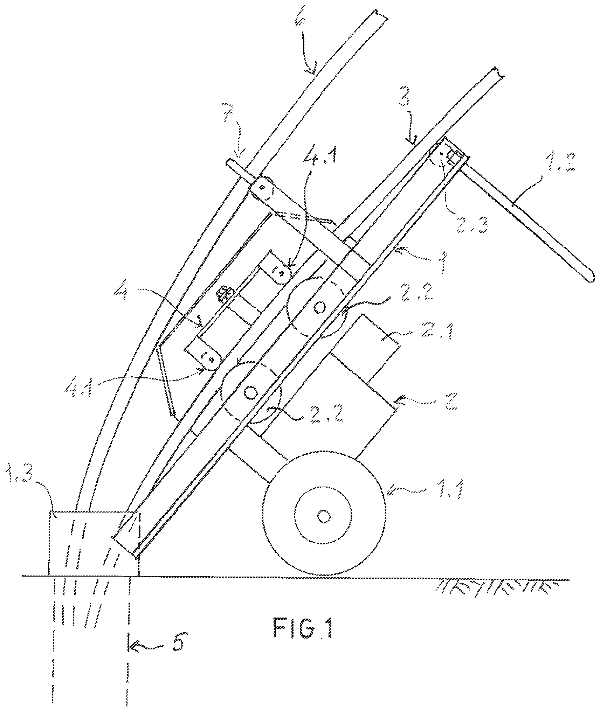

Figure 1 shows, in a side view and schematically, an arrangement including a hose feed machine according to the invention during bringing down of two pairs of geothermal heat hoses.

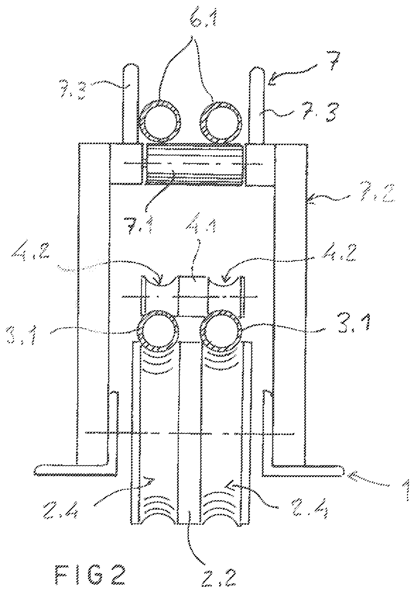

Figure 2 shows, in a partly sectioned view from behind, a detail of a feed device of the hose feed machine according to Figure 1 as seen in the feeding direction.

### Description of Embodiments

The hose feed machine and arrangement, respectively, which is shown in the figures, comprises a frame 1, which is carried by a pair of wheels 1.1 and which may be placed in horizontal position by means of a leg support 1.2. The frame 1 carries an electric motor 2, which, via a gearing 2.1, drives two driving wheels 2.2, acting on a first pair of hoses 3. The hoses 3.1 are kept pressed against the driving wheels 2.2 by means of a pressure wheel bridge 4, having pressure wheels 4.1 arranged at the respective driving wheel 2.2. The hoses 3.1 run over a first supporting roll 2.3 from a first and a second hose reel, not shown in the figures, to the driving wheels 2.2. The first pair of hoses 3 runs via a guiding collar 1.3 arranged on the frame 1 down into a drill hole 5 in the ground.

A second pair of hoses 6 runs from a third and a fourth hose reel, not shown in the figures, via a guide device 7 comprising a second supporting roll 7.1 down into the guiding collar 1.3 and the drill hole 5. The supporting roll of the guide device is used to decrease the friction and avoid damage to the second pair of hoses. The second supporting roll 7.1 is arranged on a pedestal 7.2 above the driving wheels 2.2, which also carries two rod-shaped lateral supports 7.2. Both pairs of hoses 3, 6 are connected to a hose head, not shown in the figures, at the end that first is fed down into the drill hole 5, which means that the first pair of hoses 3, which is fed down by the driving wheels 2.2, pulls along the second pair of hoses 6.

Each one of the driving wheels 2.2 has two grooved channels 2.4 for the first pair of hoses 3, each one of the channels 2.4 having a partly circular cross-section. Each one of the corresponding pressure wheels 4.1 has two smooth channels 4.2, each one of the channels 4.2 having a partly circular cross-section. The first supporting roll 2.3 of the frame 1 and the second supporting roll 7.1 of the guide device 7 are cylindrical.

Since the direction of rotation of each one of the driving wheels 2.2 can be reversed, the hose feed machine can, in addition to bringing down the hoses 3, 6 in a drill hole 5 according to the above, also be used for retracting the hoses 3, 6 up from a drill hole 5. The retraction is effected in an analogous way in relation to the bringing down.

Thus, by means of the hose feed machine comprised in the arrangement, according to the invention, one or more pairs of hoses can be inserted into a cavity simultaneously and/or be retrieved from a cavity simultaneously. By the existence of the guide device 7, a single operator can alone serve the machine also when two or more pairs of hoses are fed, which is a great advantage.

Each one of the individual hoses 3, 6 may have a cross-section (a dimension) of approx. 0-800 mm, preferably approx. 30-90 mm, and most preferably some one of approx. 32 mm, approx. 40 mm, approx. 50 mm, or approx. 82 mm. The hoses 3, 6 may either have primarily the same cross-section or mutually different dimensions. However, it is an advantage if the hoses 3, 6 of each pair of hoses have primarily the same cross-section.

The electric motor 2 can generate a power of approx. 0-15 kW, preferably approx. 0,8-2,0 kW, and most preferably some one of approx. 0,88 kW, approx. 1,1 kW, or approx. 1,5 kW.

It is also possible to bring down as well as up a pump into and out of, respectively, the drill hole 5 according to the above using the hose feed machine.

It is also possible to lay as well as recover cables using the hose feed machine, the cable being fed in an analogous way in relation to the feed of hose.

## Claims

1. An arrangement comprising a first pair of hoses (3), a second pair of hoses (6) and a hose feed machine for the feed of the first and second pair of hoses (3, 6) into and/or out of a cavity (5), the machine having a motor (2), which drives at least one driving wheel (2.2), which in turn exerts a feed force on the first pair of hoses (3), the machine being arranged to feed at least the second pair of hoses (6) into the cavity (5) simultaneously with the first pair of hoses (3) and/or to feed at least one second pair of hoses (6) out of the cavity (5) simultaneously with the first pair of hoses (3), and the pairs of hoses (3, 6) being mechanically interconnected in at least one point, wherein the arrangement further comprises a hose head, wherein both pairs of hoses are connected to the hose head and wherein at least one driving wheel (2.2) exerts said feed force directly on said first pair of hoses (3), which in turn pulls along said second pair of hoses (6).

2. Arrangement according to claim 1, wherein the pairs of hoses (3, 6) are intended to be included in a heating system for utilizing geothermal heat or the like, and the cavity (5) consists of a drill hole (5) in the ground.

3. Arrangement according to claim 1, wherein a guide device (7) is arranged to keep together and to guide the second pair of hoses (6) primarily parallel to the first pair of hoses (3) past the hose feed machine.

4. Arrangement according to claim 3, wherein the guide device (7) comprises at least two lateral supports (7.3).

5. Arrangement according to claim 3 or 4, wherein the guide device (7) comprises a supporting roll (7.1) having a rotation axis that is primarily parallel to a drive shaft of the driving wheel (2.2).

## Patentansprüche

1. Anordnung, die ein erstes Paar Schläuche (3), ein zweites Paar Schläuche (6) und eine Schlauchzufuhrmaschine für die Zufuhr des ersten und des zweiten Paars Schläuche (3, 6) in und/oder aus einem Hohlraum (5) hinein bzw. heraus umfasst, wobei die Maschine einen Motor (2) aufweist, der mindestens ein Antriebsrad (2.2) antreibt, das wiederum eine Zufuhrkraft auf das erste Paar Schläuche (3) ausübt, wobei die Maschine dazu angeordnet ist, mindestens das zweite Paar Schläuche (6) gleichzeitig mit dem ersten Paar Schläuche (3) in den Hohlraum (5) zuzuführen und/oder mindestens ein zweites Paar Schläuche (6) gleichzeitig mit dem ersten Paar Schläuche (3) aus dem Hohlraum (5) herauszuführen, und wobei die Paare von Schläuchen (3, 6) an zumindest einer Stelle mechanisch miteinander verbunden sind, wobei die Anordnung ferner einen Schlauchkopf umfasst, wobei beide Paare von Schläuchen mit dem Schlauchkopf verbunden sind und wobei mindestens ein Antriebsrad (2.2) die Zufuhrkraft direkt auf das erste Paar Schläuche (3) ausübt, das wiederum das zweite Paar Schläuche (6) mit sich zieht.

2. Anordnung nach Anspruch 1, wobei die Paare von Schläuchen (3, 6) in einem Heizsystem zur Verwendung geothermischer Wärme oder dergleichen enthalten sein sollen und wobei der Hohlraum (5) aus einem Bohrloch (5) im Boden besteht.

3. Anordnung nach Anspruch 1, wobei eine Führungsvorrichtung (7) dahingehend angeordnet ist, das zweite Paar Schläuche (6) zusammenzuhalten und vornehmlich parallel zu dem ersten Paar Schläuche (3) an der Schlauchzufuhrmaschine vorbei zu führen.

4. Anordnung nach Anspruch 3, wobei die Führungsvorrichtung (7) mindestens zwei laterale Stützen (7.3) umfasst.

5. Anordnung nach Anspruch 3 oder 4, wobei die Führungsvorrichtung (7) eine Stützrolle (7.1) umfasst, die eine Drehachse aufweist, die vornehmlich parallel zu einer Antriebswelle des Antriebsrads (2.2) ist.

## Revendications

1. Système comprenant une première paire de tuyaux (3), une seconde paire de tuyaux (6) et une machine d'enroulement/déroulement de tuyaux servant à l'enroulement/au déroulement des première et seconde paires de tuyaux (3, 6) dans et/ou depuis une cavité (5), la machine comportant un moteur (2) qui entraîne au moins une roue d'entraînement (2.2), qui exerce alors une force d'enroulement/de déroulement sur la première paire de tuyaux (3), la machine étant conçue pour enrouler au moins la seconde paire de tuyaux (6) dans la cavité (5) de façon simultanée par rapport à la première paire de tuyaux (3) et/ou pour dérouler au moins une seconde paire de tuyaux (6) depuis la cavité (5) de façon simultanée par rapport à la première paire de tuyaux (3), et les paires de tuyaux (3, 6) étant reliées l'une à l'autre de façon mécanique au niveau d'au moins un point,
le système comprenant en outre une tête de tuyau, les deux paires de tuyaux étant reliées à la tête de tuyau et au moins une roue d'entraînement (2.2) exerçant ladite force d'enroulement/de déroulement sur ladite première paire de tuyaux (3), qui entraîne alors par traction ladite seconde paire de tuyaux (6).

2. Système selon la revendication 1, dans lequel les paires de tuyaux (3, 6) sont destinées à faire partie d'un système de chauffage conçu pour utiliser la chaleur géothermique ou similaire, et la cavité (5) est un trou de forage (5) dans le sol.

3. Système selon la revendication 1, dans lequel un dispositif de guidage (7) est conçu pour maintenir la seconde paire de tuyaux (6) ensemble et pour les guider essentiellement parallèlement à la première paire de tuyaux (3) au-delà de la machine d'enroulement/de déroulement de tuyaux.

4. Système selon la revendication 3, dans lequel le dispositif de guidage (7) comprend au moins deux supports latéraux (7.3).

5. Système selon la revendication 3 ou 4, dans lequel le dispositif de guidage (7) comprend un rouleau de support (7.1) présentant un axe de rotation qui est essentiellement parallèle à un arbre d'entraînement de la roue d'entraînement (2.2).
